(19) **Europäisches Patentamt / European Patent Office / Office européen des brevets**

(11) **EP 4 007 371 B1**

(12) **EUROPEAN PATENT SPECIFICATION**

(45) Date of publication and mention
of the grant of the patent:
**06.08.2025 Bulletin 2025/32**

(21) Application number: **20845998.2**

(22) Date of filing: **15.04.2020**

(51) International Patent Classification (IPC):
***H04W 48/18*** (2009.01)      ***H04W 28/00*** (2009.01)

(52) Cooperative Patent Classification (CPC):
**H04L 45/80; H04L 45/85; H04L 47/245;**
H04L 47/822; H04W 48/18

(86) International application number:
**PCT/JP2020/016488**

(87) International publication number:
**WO 2021/019847 (04.02.2021 Gazette 2021/05)**

(54) **CHANGE OF NETWORK SLICE DEPENDING ON USAGE STATUS**

WECHSEL EINER NETZSCHEIBE NACH NUTZUNGSSTATUS

CHANGEMENT DE TRANCHE DE RÉSEAU EN FONCTION DE L'ÉTAT D'UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.07.2019 JP 2019139449**

(43) Date of publication of application:
**01.06.2022 Bulletin 2022/22**

(73) Proprietor: **Sony Group Corporation**
**Tokyo 108-0075 (JP)**

(72) Inventor: **IWAI, Takuya**
**Tokyo 108-0075 (JP)**

(74) Representative: **Witte, Weller & Partner**
**Patentanwälte mbB**
**Postfach 10 54 62**
**70047 Stuttgart (DE)**

(56) References cited:
**EP-A1- 3 654 692        WO-A1-2019/011190**
**WO-A1-2020/228698     JP-A- 2019 511 179**
**US-A1- 2018 352 501     US-A1- 2019 020 549**
**US-A1- 2019 053 104**

• **CATT: "Service triggered network slice selection
procedure", 3GPP TSG-SA WG2#116, S2-163980,
17 July 2016 (2016-07-17), XP051121664,
Retrieved from the Internet <URL:http://
www.3gpp.org/ftp/tsg_sa/WG2_Arch/
TSGS2_116_Vienna/Docs/S2-163980.zip>**

## Description

TECHNICAL FIELD

The present technology relates to control of network slices. Specifically, the present invention relates to a network-slice control server that controls switching between network slices, a service server, and respective processing methods thereby.

BACKGROUND ART

In the 3GPP standard TS23.501 related to the fifth generation (5G) core network, a network slice to be connected to a user terminal is determined on the basis of information managed in a core network. Here, the information managed in the core network is, for example, subscribed single network slice selection assistance information (S-NSSAI) managed in a unified data management (UDM). On the basis of the S-NSSAI, a single network slice is identified. The subscribed S-NSSAI is S-NSSAI-based subscriber information, and indicates a network slice to which user equipment (UE) is subscribed for use in a public land mobile network (PLMN). The S-NSSAI includes a slice/service type (SST) and a slice differentiator (SD). The SST refers to network slice behaviour expected in terms of functions and services. The SD is optional information that complements a slice/service type to discriminate among a plurality of network slices within the same SST. For such a network slice, for example, a mobile communication system has been proposed in which a network slice to be allocated to a service is dynamically changed for each user in accordance with a status of the user (see, for example, Patent Document 1).

CITATION LIST

PATENT DOCUMENT

Patent Document 1: Japanese Patent Application Laid-Open No. 2018-157506 (JP 2018-157506 A)
Patent Document 2: WO 2020/228698 A1 (relevant to the question of novelty pursuant to Art. 54(3) EPC)
Patent Document 3: US 2018/352501 A1
Patent Document 4: US 2019/053104 A1

SUMMARY OF THE INVENTION

PROBLEMS TO BE SOLVED BY THE INVENTION

In the conventional technique described above, a network slice is switched on the basis of a service type in use or a context in use of a service at a user terminal, and a core network determines switching to the network slice on the basis of a request from the user terminal.

However, a service provider that provides the service constructs and operates the network slice to which various resources are allocated in accordance with the estimation of the service demand, whereas, due to physical resources and cost constraints, it is not always that the service provider can provide uniform service quality to all users. In addition, the level of service quality required by the users is generally different for each user, and thus it is necessary to determine the request of such a user from the position of the service provider.

The present technology has been made in view of such a situation, and an object of the present technology is to issue, from a service server of a service provider, an instruction for switching regarding a network slice to be applied to a user terminal.

SOLUTIONS TO PROBLEMS

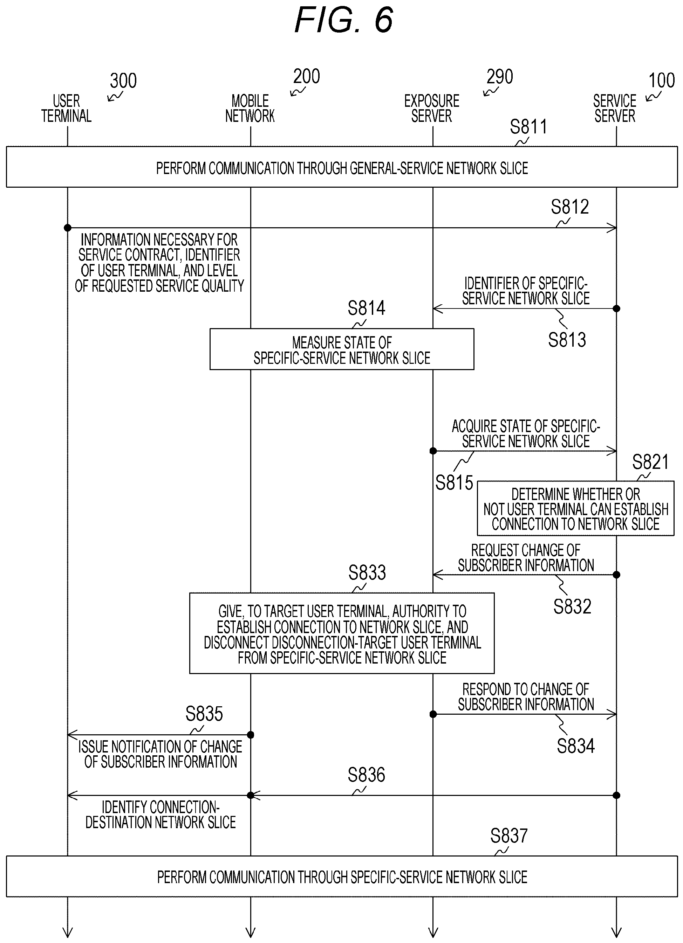

The present technology has been made to solve the above issues. There are provided a network-slice control server, a service server and corresponding control methods according to the appended claims. In the following, the invention is best understood in view of figure 6. The remaining embodiments, aspects and examples disclosed below are included for illustrative purposes and for facilitating the understanding of the invention.

BRIEF DESCRIPTION OF DRAWINGS

Fig. 1 illustrates an exemplary overall configuration of a wireless communication system according to an embodiment of the present technology.
Fig. 2 illustrates an exemplary configuration of a mobile network 200 according to the embodiment of the present technology.
Fig. 3 illustrates an exemplary configuration of an exposure server 290 according to the embodiment of the present technology.
Fig. 4 illustrates an exemplary configuration of a user terminal 300 according to the embodiment of the present technology.
Fig. 5 illustrates an exemplary configuration of a service server 100 according to the embodiment of the present technology.
Fig. 6 is a sequence diagram illustrating a flow of operation of a wireless communication system according to a first embodiment of the present technology.
Fig. 7 is a flowchart illustrating an exemplary processing procedure of a determination of connectability to a network slice by a service server 100 (step S821) according to the first embodiment of the present technology.
Fig. 8 is a sequence diagram illustrating a flow of operation of a wireless communication system according to a second embodiment of the present technology.

Fig. 9 is a flowchart illustrating an exemplary processing procedure of a determination of connectability to a network slice by a service server 100 (step S821) according to the second embodiment of the present technology.

MODE FOR CARRYING OUT THE INVENTION

Hereinafter, modes for carrying out the present technology (hereinafter, referred to as embodiments) will be described. The description will be given in the following order.

1. First Embodiment (example in which an instruction for switching to a network slice is issued from a service server)
2. Second Embodiment (example in which necessity of upgrade is confirmed to a disconnection candidate; presently not claimed)

<1. First Embodiment>

[Wireless Communication System]

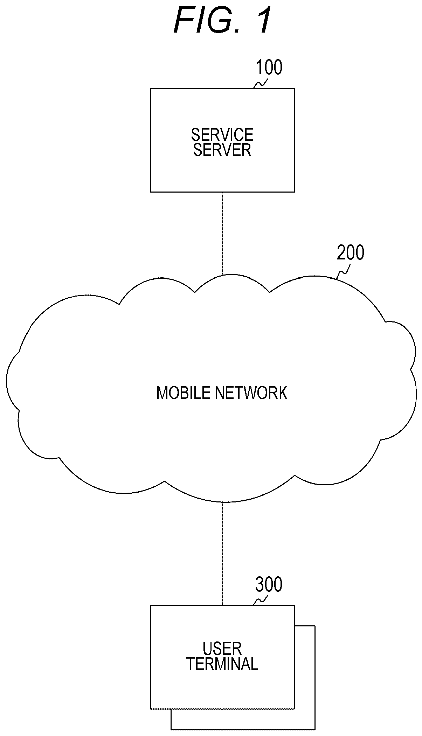

Fig. 1 illustrates an exemplary overall configuration of a wireless communication system according to an embodiment of the present technology.

The wireless communication system includes a service server 100, a mobile network 200, and a user terminal 300.

The user terminal 300 is a user terminal that performs wireless communication in the wireless communication system. Note that the user terminal 300 is also referred to as, for example, user equipment (UE), or a user device.

The service server 100 is a server managed by a service provider that provides services. The service server 100 may be a server located in a data network (DN) outside the mobile network 200 (for example, a 3GPP system). The service server 100 may be operated by an entity (for example, a third party) different from an operator that provides the mobile network 200 (namely, a mobile network operator (MNO)). The service provider supplies its own service to the user terminal 300 with the service server 100. In addition, the service server 100 performs processing such as user registration necessary for providing a service.

The mobile network 200 provides a wireless communication network and a core network between the user terminal 300 and the service server 100. The mobile network 200 may be, for example, a fifth generation cellular network (5G core network) defined by 3GPP and a wireless access network (for example, next generation radio access network (NG-RAN)).

[Mobile Network]

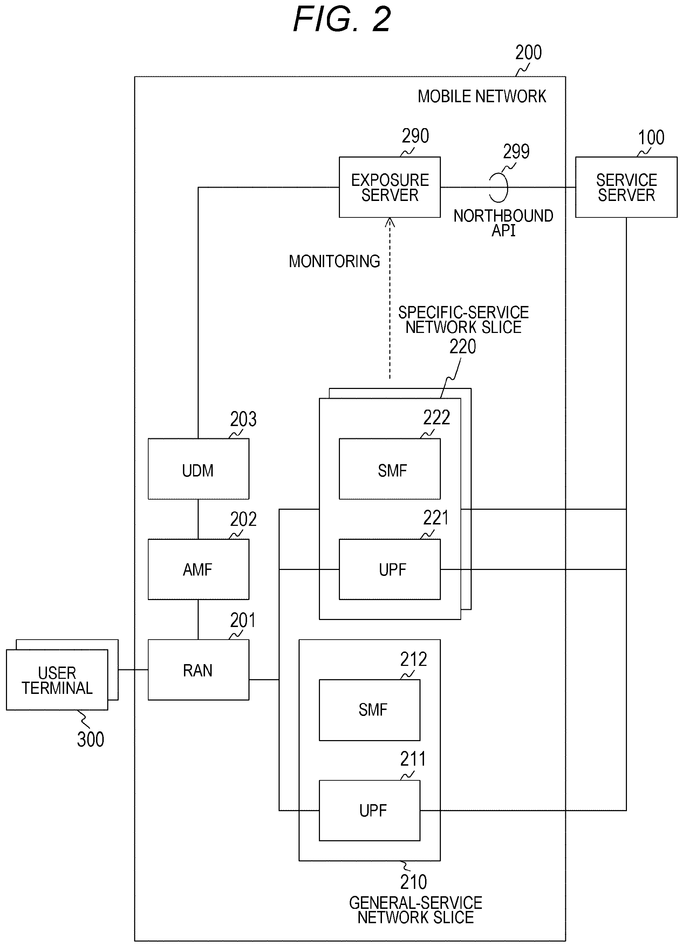

Fig. 2 illustrates an exemplary configuration of the mobile network 200 according to the embodiment of the present technology.

The mobile network 200 includes an access and mobility management function (AMF) 202 and a unified data management (UDM) 203 as components of the 5G core network. Further, the mobile network 200 includes a radio access network (RAN) 201 as a component. The RAN 201 provides a network connection to the user terminal 300, and includes one or more base stations (for example, gNodeB (gNB), eNodeB (eNB), new generation eNB (ng-eNB), and enhanced gNB (en-gNB). The AMF 202 performs access control and mobility management. The UDM 203 is for managing subscriber information (contract information) of the user. The RAN 201, the AMF 202, and the UDM 203 conform to those disclosed in the 3GPP specification. In addition, at least one of the RAN 201, the AMF 202, or the UDM 203 may be included in part of a network function (NF) provided in the 3GPP specification. Note that the RAN 201, the AMF 202, and the UDM 203 may each serve as dedicated hardware, or may each serve as software to be executed on a general-purpose server by server virtualization or container-based virtualization.

Further, the mobile network 200 provides a network slice to the user terminal 300. The network slice is a logical network that can provide a specific network capability and a specific network characteristic, and includes one or more network slice instances. Such a network slice instance refers to a set of one or more network functions (NFs) and one or more resources (for example, computing resources, storage resources, and networking resources) that form a network slice to be located. In this embodiment, such network slices are roughly divided into a general-service network slice 210 and a specific-service network slice 220. The specific-service network slice 220 is a network slice optimized for a specific service provided by the service server 100. The general-service network slice 210 is a network slice different from the specific-service network slice 220. In the 3GPP standard TS23.501, one of the network slices of an operator under contract with a subscriber is provided as a general-service network slice 210. In contrast, in this embodiment, one of such specific-service network slices 220 separately secured by the service provider is allocated to the user. Note that a specific-service network slice and a general-service network slice may be distinguished due to difference in a slice differentiator (SD) in single network slice selection assistance information (S-NSSAI) for identification of these network slices. In other words, on the basis of the SD in the S-NSSAI, a network slice may be identified whether a specific-service network slice or a general-service network slice. The general-service network slice may be or include a network slice identified on the basis of default S-NSSAI.

As described above, each of the network slices may include one or more network slice instances. The one or more network slice instances may include fifth generation core (5GC) nodes such as a user plane function (UPF) 211 and a session management function (SMF) 212. The UPF 211 and an UPF 221 each provide a user-data forwarding function. The SMF 212 and an SMF 222 are control planes for the UPF 211 and the UPF 221.

Note that at least a specific-service network slice 220 among the network slices has a function of disclosing the usage of a computational or network resource (for example, computing resource, storage resource, or networking resource) of the software included in this specific-service network slice 220 and the execution environment thereof. In such disclosure, the network slice uses an existing monitoring or management protocol such as a simple network management protocol (SNMP) to disclose the usage of the resource to another component such as an exposure server 290.

The mobile network 200 further includes the exposure server 290 (for example, network exposure function (NEF)). The NEF may be included as one function of the above AF. The exposure server 290 monitors the usage of the resource of at least the specific-service network slice 220 among the network slices. For example, the exposure server 290 communicates with the service server 100 outside the mobile network 200 (for example, in the DN), through a northbound application programming interface (northbound API) 299, to perform various interactions. That is, the exposure server 290 performs interactions with the service server 100 outside the 5G core network (for example, in the DN) through the northbound API 299.

[Exposure Server]

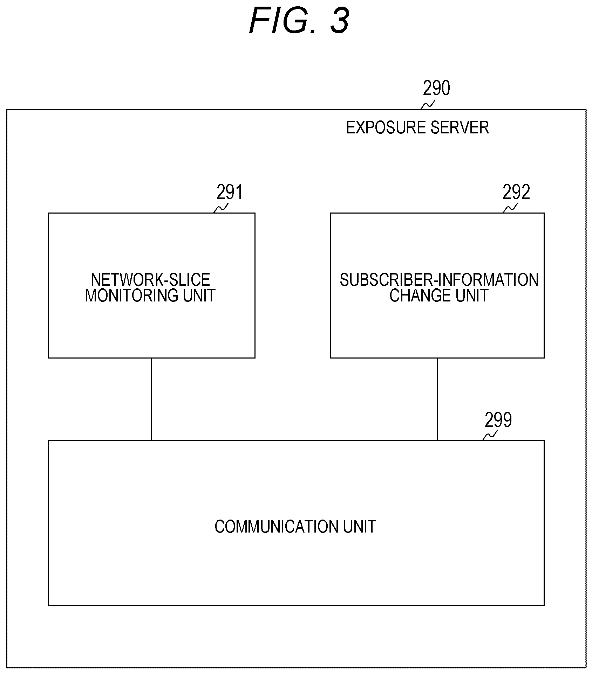

Fig. 3 illustrates an exemplary configuration of the exposure server 290 according to the embodiment of the present technology.

The exposure server 290 includes a network-slice monitoring unit 291, a subscriber-information change unit 292, and a communication unit 299. Note that the exposure server 290 is an exemplary network-slice control server described in the claims.

The network-slice monitoring unit 291 monitors the usage of the resource of at least the specific-service network slice 220 among the network slices and notifies the service server 100 of the monitoring result.

The subscriber-information change unit 292 changes subscriber information such that the user terminal 300 to which the service server 100 has issued the instruction can establish connection to the specific-service network slice 220.

The communication unit 299 communicates with the service server 100 and another component included in the mobile network 200.

Note that an example in which the exposure server 290 includes the network-slice monitoring unit 291 has been given here; however, this is merely an example, and thus the network-slice monitoring unit 291 may be provided separately from the exposure server 290. Therefore, for example, an orchestrator such as an open network automation platform (ONAP), a European Telecommunications Standards Institute (ETSI) management and orchestration (MANO), or an ETSI multi access computing (ETSI MEC) may play this role.

[User Terminal]

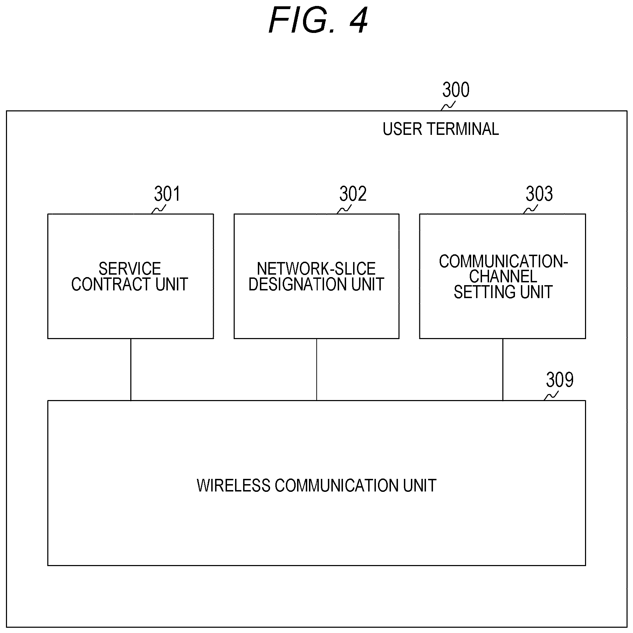

Fig. 4 illustrates an exemplary configuration of the user terminal 300 according to the embodiment of the present technology.

The user terminal 300 includes a service contract unit 301, a network-slice designation unit 302, a communication-channel setting unit 303, and a wireless communication unit 309.

The wireless communication unit 309 performs wireless communication through the mobile network 200.

The service contract unit 301 notifies, through the wireless communication unit 309, the service server 100 of information regarding user registration for each service and a series of information regarding the level of requested service quality.

The network-slice designation unit 302 receives, from the service server 100, identification information for designating a single network slice from the specific-service network slices 220 and notifies the communication-channel setting unit 303 of the identification information. The identification information for designating the network slice may be S-NSSAI managed in the UDM 203, or may be an SD therein.

The communication-channel setting unit 303 instructs the wireless communication unit 309 to open a communication channel for a service, on the basis of the notification from the network-slice designation unit 302.

[Service Server]

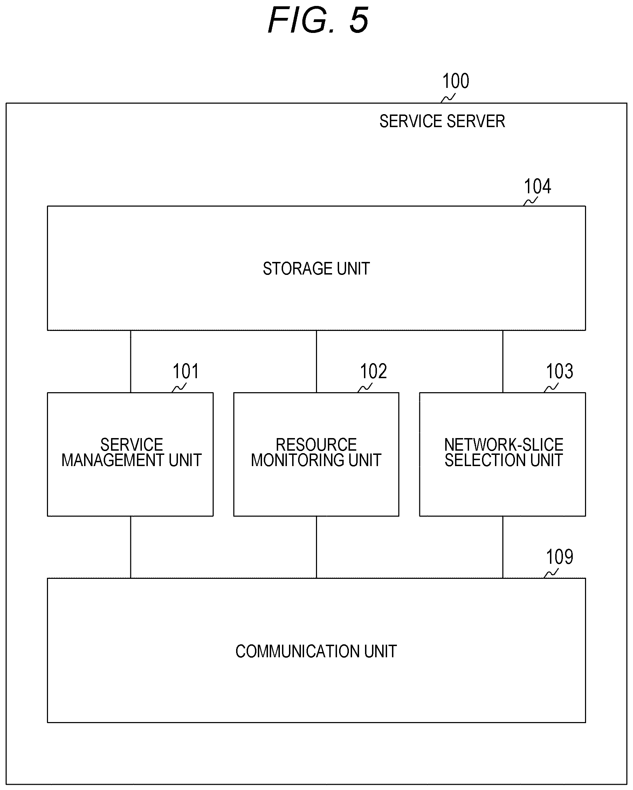

Fig. 5 illustrates an exemplary configuration of the service server 100 according to the embodiment of the present technology.

The service server 100 includes a service management unit 101, a resource monitoring unit 102, a network-slice selection unit 103, a storage unit 104, and a communication unit 109.

The communication unit 109 communicates with the user terminal 300 or the exposure server 290 through the mobile network 200.

The service management unit 101 performs processing regarding user registration, and further acquires, from the user terminal 300, an identifier and a series of information regarding the level of requested service quality of the user terminal 300.

The resource monitoring unit 102 receives, from the exposure server 290, the usage of the computational or network resource of the software included in the specific-service network slice 220 and the execution environment thereof.

The network-slice selection unit 103 selects a specific-service network slice 220 on the basis of service contract information stored in the storage unit 104. The network-slice selection unit 103 issues, to the exposure server 290, an instruction such that the user terminal 300 can establish connection to the specific-service network slice 220. Further, the network-slice selection unit 103 transmits identification information of the specific-service network slice 220 to the user terminal 300.

The storage unit 104 stores, for example, an identifier (for example, S-NSSAI or SD) of the specific-service network slice 220, the identifier (for example, 5G-globally unique temporary UE identity (5G-GUTI), 5G-temporary mobile subscriber identity (5G-TMSI), or subscription concealed identifier (SUCI)) of the user terminal 300, and the level of requested service quality thereof.

[Operation]

Fig. 6 is a sequence diagram illustrating a flow of operation of a wireless communication system according to a first embodiment of the present technology.

Initially, the user terminal 300 is wirelessly communicable through the general-service network slice 210 of the mobile network 200 (step S811). More specifically, the user terminal 300 transmits and receives one or more pieces of S-NSSAI (for example, requested NSSSAI, allowed NSSAI, configured NSSAI) to and from the AMF, so that a network slice that the mobile network 200 provides is determined. Prior to start of using a service, the user terminal 300 transmits, to the service server 100, information necessary for using the service, the identifier of the user terminal 300, and the level of requested service quality (step S812).

Here, as the information necessary for using the service, for example, assumed is personal information such as an account name, a password, and an address of the user. The identifier of the user terminal 300 is information associated with a subscriber identity module (SIM), and examples of the identifier of the user terminal 300 include a telephone number, an international mobile subscriber identity (IMSI), and a generic public subscription identifier (GPSI). Further or alternatively, the identifier of the user terminal 300 may be 5G-GUTI, 5G-TMSI, or SUCI.

In addition, the level of requested service quality corresponds to a service level agreement (SLA), and assumed are options such as a best effort type in which the service quality is likely to fluctuate due to susceptibility from other service users or a band guarantee type (quality guarantee type) that is insusceptible. Further, more options can be set on the basis of insusceptibility from the other service users. Note that as a method for encoding an option, for example, considered is encoding in which integer values are used and "0" is set to the best effort type and "1" is set to the bandwidth guarantee type.

The user terminal 300 notifies the service server 100 of these pieces of information in step S812 using a secure protocol such as hypertext transfer protocol secure (HTTPS). Note that a series of these pieces of communication is performed through the general-service network slice 210.

Next, the service server 100 selects a network slice to be provided to the user terminal 300. For this purpose, the service server 100 designates the identifier (for example, S-NSSAI) of the specific-service network slice 220, and requests the exposure server 290 for the usage of the computational resource (for example, computing resource) or network resource (for example, networking resource) of the software included in the corresponding network slice and the execution environment thereof (step S813).

After receiving the request from the service server 100, the exposure server 290 measures the state of the specific-service network slice 220 (step S814). Specifically, the usage (usage status) of each of a processor (central processing unit: CPU), a memory, and a network of a virtual machine or a container that executes one or more network slice instances (alternatively, the UPF 221 and the SMF 222 corresponding thereto) included in the corresponding network slice is measured by utilizing an existing monitoring technique such as simple network management protocol (SNMP), NetFlow, or Zabbix.

After completing the measurement, the exposure server 290 notifies the service server 100 of the measurement result (step S815). Note that this measurement result is returned to the service server 100 through, for example, a hypertext transfer protocol (HTTP)-based representational state transfer (REST) API.

The service server 100 determines whether or not the user terminal 300 can establish connection to the specific-service network slice 220 (step S821). A specific example of the algorithm for this determination will be described later.

The service server 100 allows the user terminal 300 to be connected to the specific-service network slice 220, and disconnects, from the specific-service network slice 220, a user terminal 310 to be disconnected that is designated in step S821. For this purpose, the service server 100 updates subscriber information of the user terminal 300 to be connected and the user terminal 310 to be disconnected (step S832). Specifically, first, the service server 100 instructs the exposure server 290 to change, to the S-NSSAI of the specific-service network slice 220, the S-NSSAI of the user terminal 300 to be connected, and to change, to a default value before change, the S-NSSAI of the user terminal 310 to be disconnected.

Note that the exposure server 290 corresponds to, for example, a network exposure function (NEF) defined by 3GPP. At this time, the service server 100 can achieve the instruction for changing, by including, in the argument of the update request (Nnef_ParameterProvision_Update), at least the respective identifiers of the user terminal 300 to be connected and the user terminal 310 to be disconnected and information regarding an identifier of the network slice determined in step S814. Here, as each identifier of the user terminal 300 to be connected and the user terminal 310 to be disconnected, for example, assumed is a telephone number, IMSI, GPSI, 5G-GUTI, 5G-TMSI, or SUCI. In addition, as the identifier of the network slice, for example, S-NSSAI, or a data network name (DNN) is assumed.

The exposure server 290 issues an instruction for updating the subscriber information managed in the UDM 203 using the information received from the service server 100 (step S833). The UDM 203 transmits the instruction to another related component of the mobile network 200, so that the UDM 203 gives, to the user terminal 300 to be connected, the authority to establish connection to the specific-service network slice 220. Further, as a result, the UDM 203 takes away, from the user terminal 310 to be disconnected, the authority to establish connection to the specific-service network slice 220. A series of these pieces of processing is as defined by 3GPP. Finally, the service server 100 receives a notification of the completion through the exposure server 290 (step S834).

The user terminal 300 receives a notification of the update of the subscriber information (for example, subscribed S-NSSAI(s)) through the AMF 202 of the mobile network 200 (step S835). As a result, the user terminal 300 can establish connection to the mobile network 200 through the AMF 202. However, this alone cannot specify the network slice to be connected. Thus, the service server 100 transmits the identifier (for example, S-NSSAI) of the network slice to be connected and information for identifying the application used in the network slice, to the user terminal 300 at the application level (step S836). As a result, the user terminal 300 can establish connection to the network slice at the application level.

The user terminal 300 connects to the network slice designated by the service server 100 and communicates with the service server 100 through the network slice (step S837).

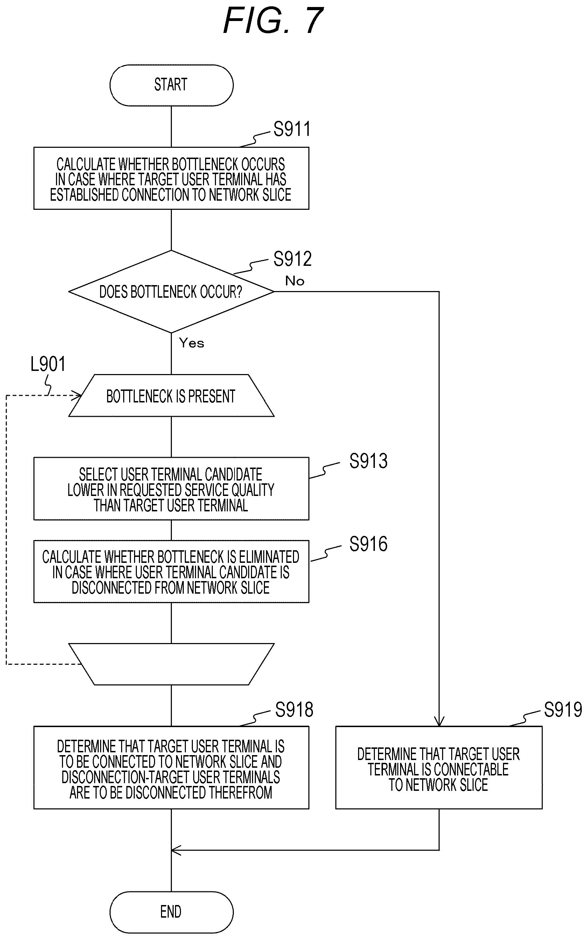

Fig. 7 is a flowchart illustrating an exemplary processing procedure of the determination of connectability to the network slice by the service server 100 (step S821) according to the first embodiment of the present technology.

First, on the basis of the usage of the resource acquired in step S815, the service server 100 calculates whether or not the user terminal 300 to be connected can be accommodated (step S911).

In this algorithm, it is assumed that a predetermined certain amount of a resource is consumed due to the accommodation of the user terminal 300 to be connected. That is, it is assumed that the following expression is satisfied.

$$R^{+}_{i,j} = R_{i,j} - D_{i,j}$$

Here, $R^{+}_{i,j}$ represents the usage of the computational or network resource j of the component i after the user terminal 300 to be connected establishes connection to the network slice. As the component i, for example, the UPF 221, the SMF 222, or a transport, is assumed. In addition, as the resource j, for example, the processor, the memory, or the bandwidth of the network is assumed. Furthermore, $R_{i,j}$ represents the usage of the computational or network resource j of the component i before the user terminal 300 to be connected establishes connection to the network slice. $D_{i,j}$ represents the resource consumption of the computational or network resource j of the component i in a case where the user terminal 300 to be connected has established connection to the network slice. That is, the occurrence of a bottleneck is determined in consideration of for example, the usage rate of the CPU and the usage rate of the memory and the ratio of the amount of traffic transfer in the network interface of the virtual machine in the virtualized network, as the state of the network slice.

In additional accommodation of another user terminal 300 to be connected, the service server 100 determines whether or not an entity as the bottleneck is present (step S912). Note that the bottleneck refers to the usage of the resource more than the upper limit. That is, it is determined whether the component i satisfying the following condition is present.

$$R^{+}_{i,j} < 0$$

In a case where no bottleneck occurs (step S912: No), it is determined that the user terminal 300 to be connected is connectable to the network slice (step S919).

Otherwise, in a case where the bottleneck occurs (step S912: Yes), the user terminal lower in requested service quality than the user terminal 300 to be connected is selected as the user terminal 310 to be disconnected (step S913), and similarly calculated is whether or not the bottleneck is eliminated in a case where the user terminal 310 to be disconnected is removed from the network slice (step S916). These pieces of processing are repeated until the bottleneck is eliminated (L901). When the bottleneck is eliminated, it is determined that the user terminal 300 to be connected is connectable to the network slice and all of such user terminals 310 to be disconnected are not connectable to the network slice (step S918).

As described above, according to the first embodiment of the present technology, the user terminal 300 can establish connection to the specific-service network slice 220 on the basis of the instruction for switching issued from the service server 100. That is, the service provider can switch to a network slice that the user connects, between the network slices provided by the service provider.

Note that, in the first embodiment, an example of establishing connection to the specific-service network slice 220 has been given; however, the user terminal 300 may establish connection to the general-service network slice 210 on the basis of an instruction for switching issued from the service server 100.

<2. Second Embodiment>

In the first embodiment described above, it is assumed that there is no change of the level of requested service quality of a user terminal 310 to be disconnected. Therefore, in a case where a new user terminal higher in the level of requested service quality is added, the user terminal to be disconnected is likely to be unilaterally disconnected from the specific-service network slice 220 in connection so far. Therefore, in a second embodiment, an example of giving an opportunity to update the level of requested service quality to a user terminal 310 to be disconnected will be given.

Note that the configuration of a wireless communication system is basically similar to that of the first embodiment described above. In the second embodiment, in a user terminal 300, a service contract unit 301 further performs processing for updating the level of requested service quality. In addition, in a service server 100, a service management unit 101 further performs processing for updating the level of requested service quality.

[Operation]

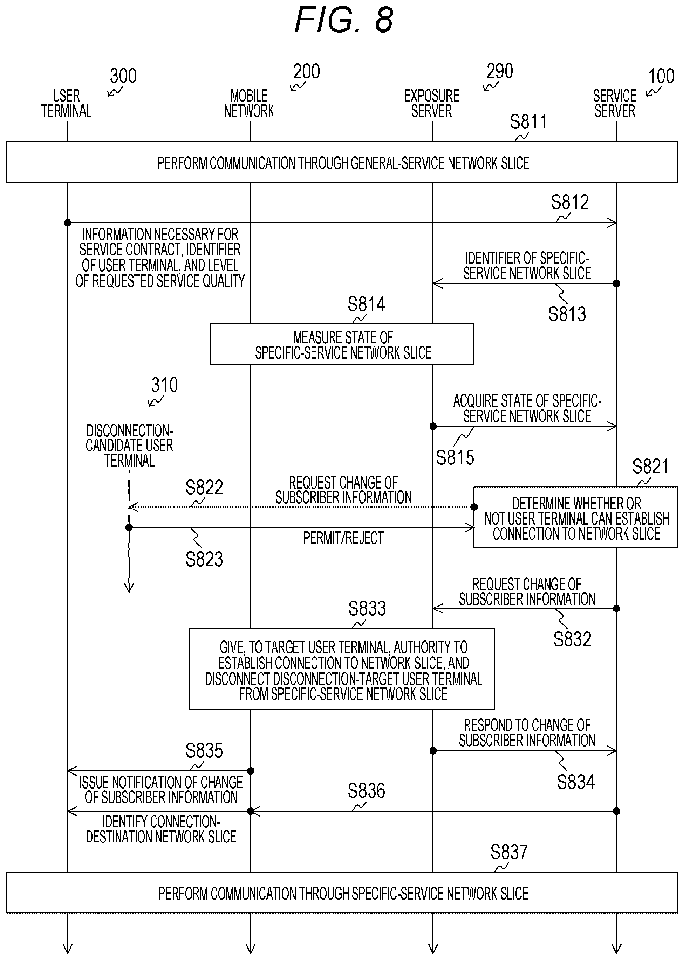

Fig. 8 is a sequence diagram illustrating a flow of operation of the wireless communication system according to the second embodiment of the present technology.

In the second embodiment, the processing in steps S821 to S823 described below is performed. Note that the other processing is similar to that of the first embodiment described above, and thus detailed description thereof will be omitted.

On the basis of the usage of the resource acquired in step S815, the service server 100 calculates whether or not the user terminal 300 to be connected can be accommodated, following a procedure similar to that of the first embodiment described above (step S821). Due to the calculation, in a case where it is determined that a bottleneck occurs, an inquiry as to whether the level of requested service quality is to be upgraded is made to a user terminal 310 to be disconnected (step S822). In response to the inquiry, the user terminal 310 to be disconnected transmits a reply indicating that the upgrade is permitted or the upgrade is rejected to the service server 100 (step S823). In other words, an opportunity to update the level of requested service quality is given to the user terminal 310 to be disconnected.

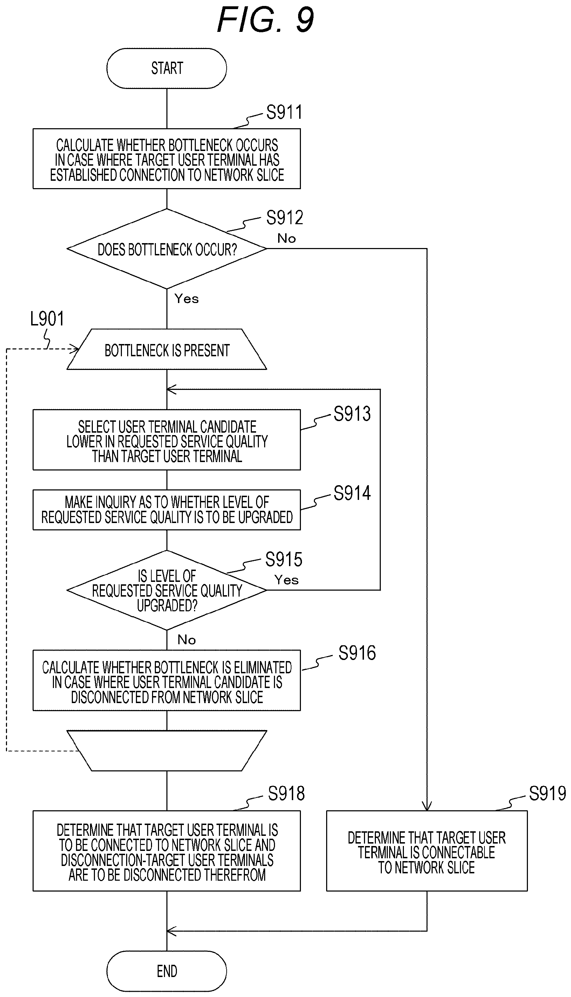

Fig. 9 is a flowchart illustrating an exemplary processing procedure of the determination of connectability to a network slice by the service server 100 (step S821) according to the second embodiment of the present technology.

On the basis of the usage of the resource acquired in step S815, the service server 100 calculates whether or not the user terminal 300 to be connected can be accommodated, following the procedure similar to that of the first embodiment described above (step S911).

In a case where no bottleneck occurs (step S912: No), it is determined that the user terminal 300 to be connected is connectable to the network slice (step S919).

Otherwise, in a case where the bottleneck occurs (step S912: Yes), the user terminal 310 to be disconnected is selected (step S913), and an inquiry as to whether or not the level of requested service quality is to be upgraded is made to the user terminal 310 to be disconnected (step S914). In a case where the user terminal 310 to be disconnected upgrades the level of requested service quality (step S915: Yes), the user terminal is no longer to be disconnected, a different user terminal 310 to be disconnected is selected, and the processing in and after step S913 is repeated.

In a case where the user terminal 310 to be disconnected does not upgrade the level of requested service quality (step S915: No), similarly calculated is whether or not the bottleneck is eliminated in a case where the user terminal is removed from the specific-service network slice 220 (step S916).

These pieces of processing are repeated until the bottleneck is eliminated (L901). When the bottleneck is eliminated, it is determined that the user terminal 300 to be connected is connectable to the network slice and all of such user terminals 310 to be disconnected are not connectable to the network slice (step S918).

As described above, according to the second embodiment of the present technology, an opportunity to update the level of requested service quality is given to a user terminal 310 to be disconnected, resulting in suppression of unintended disconnection accompanying connection of the different user terminal 300.

Note that the above embodiments are examples for embodying the present technology, and thus the matters in the embodiments and the specified matters of the invention in the claims have a correspondence relationship. Similarly, the specified matters of the invention in the claims and the matters having the same names in the embodiments of the present technology have a correspondence relationship. The present technology, however, is not limited to the embodiments, and thus can be embodied by making various modifications to the embodiments without departing from the gist thereof.

Furthermore, the processing procedures described in the above embodiments may be regarded as a method including a series of these procedures, or as a program for causing a computer to execute the series of these procedures or as a recording medium that stores the program. As this recording medium, used can be, for example, a compact disc (CD), a mini disc (MD), a digital versatile disc (DVD), a memory card, or a Blu-ray (registered trademark) disc.

REFERENCE SIGNS LIST

| 100 | Service server |
|---|---|
| 101 | Service management unit |
| 102 | Resource monitoring unit |
| 103 | Network-slice selection unit |
| 104 | Storage unit |
| 109 | Communication unit |
| 200 | Mobile network |
| 210 | General-service network slice |
| 220 | Specific-service network slice |
| 290 | Exposure server |
| 291 | Network-slice monitoring unit |
| 292 | Subscriber-information change unit |
| 299 | Communication unit |
| 300, 310 | User terminal |
| 301 | Service contract unit |
| 302 | Network-slice designation unit |
| 303 | Communication-channel setting unit |
| 309 | Wireless communication unit |

**Claims**

1. A network-slice control server (290) comprising:

    circuitry configured to

        receive from a service server (100) a request for usage of a computational resource or network resource of software included in a corresponding specific-service network slice,
        measure a usage of the specific-service network slice (220), the usage being the usage status of each of a processor, a memory, and a network of a virtual machine or a container that executes one or more network slice instances included in the corresponding specific-service network slice (220),
        notify the service server (100) of a measurement result of the usage status,
        receive from the service server (100) an instruction to change a S-NSSAI of the user terminal to be connected to a S-NSSAI of the specific-service network slice,
        instruct an unified data management, UDM, (203) to update subscriber information managed in the UDM (203) using the information received from the service server (100) in the instruction to change, and
        notify the service server (100) of completion of the update,

    wherein the specific-service network slice corresponds to a network slice optimized for a specific service provided by the service server (100).

2. The network-slice control server (290) according to claim 1,
    wherein information received with the instruction from the service server (100) includes identification information of the specific-service network slice and identification information of the user terminal (300) to be connected to the specific-service network slice.

3. The network-slice control server according to claim 2,
    wherein information received with the instruction from the service server (100) further includes identification information of a further user terminal (310) to be disconnected from the network slice.

4. The network-slice control server according to any one of claims 1 to 3, wherein the network-slice control server (290) is provided in a fifth generation, 5G, core network and is configured to communicate with the service server (100) outside the 5G core network.

5. A service server (100) of a service provider, the service server comprising:

    circuitry configured to

        transmit, to a network-slice control server (290), a request for usage of a computational resource or network resource of software included in a corresponding specific-service network slice,
        receive a notification from the network-slice control server (290) of a measurement result of usage status, the usage status being the usage of each of a processor, a memory, and a network of a virtual machine or a container that executes one or more network slice instances included in the corresponding specific-service network slice measured by the network-slice control server (290),
        determine whether or not a user terminal can establish connection to the specific-service network slice,
        transmit, to the network-slice control server (290), an instruction to change a S-NSSAI of the user terminal to be connected to a S-NSSAI of the specific-service network slice, and
        receive a notification from the service server (100) of completion of an update of subscriber information managed in a unified data management, UDM (203) using information received from the service server (100) in the instruction to change wherein the specific-service network slice corresponds to a network slice optimized for a specific service provided by the service server (100).

6. The service server according to claim 5, wherein in a case where a bottleneck occurs due to additional connection of the user terminal (300) to the specific-service network slice, the circuitry is configured to select, as a user terminal (310) to be disconnected, a user terminal lower in the requested service quality than the user terminal (300) to be connected, and transmit, to the network-slice control server (290), the instruction including identification information of the user terminal (310) to be disconnected from the specific-service network slice.

7. The service server according to claim 6, wherein the circuitry is configured to inquire of the user terminal (310) to be disconnected whether or not the requested service quality is to be updated, before transmitting, to the network-slice control server (290), the instruction according to which a user terminal device (300) can establish a connection to the specific-service network slice.

8. The service server according to any one of claims 5 to 7, wherein the service server (100) is provided outside a fifth generation, 5G, core network and is configured to communicate with the network-slice control server (290) in the 5G core network.

9. A control method performed by a network-slice control server (290), the control method comprising:

- receiving (S813) from a service server (100) a request for usage of a computational resource or network resource of software included in a corresponding specific-service network slice;
- measuring (S814) a usage of the specific-service network slice (220), the usage being the usage status of each of a processor, a memory, and a network of a virtual machine or a container that executes one or more network slice instances included in the corresponding specific-service network slice (220);
- notifying (S815) the service server (100) of a measurement result of the usage status;
- receiving (S832) from the service server (100) an instruction to change a S-NSSAI of the user terminal to be connected to a S-NSSAI of the specific-service network slice;
- instructing an unified data management, UDM, (203) to update subscriber information managed in the UDM (203) using the information received from the service server (100) in the instruction to change; and
- notifying (S834) the service server (100) of completion of the update,

wherein the specific-service network slice corresponds to a network slice optimized for specific service provided by the service server (100).

10. A control method of a service server (100), the control method comprising:

- transmitting (S813), to a network-slice control server (290), a request for usage of a computational resource or network resource of software included in a corresponding specific-service network slice;
- receiving a notification (S815) from the network-slice control server (290) of a measurement result of usage status, the usage status being the usage of each of a processor, a memory, and a network of a virtual machine or a container that executes one or more network slice instances included in the corresponding specific-service network slice measured by the network-slice control server (290);
- determining (S821) whether or not a user terminal can establish connection to the specific-service network slice;
- transmitting (S832), to the network-slice control server (290), an instruction to change a S-NSSAI of the user terminal to be connected to a S-NSSAI of the specific-service network slice; and
- receiving (S834) a notification from the service server (100) of completion of an update of subscriber information managed in a unified data management, UDM (203) using information received from the service server (100) in the instruction to change,

wherein the specific-service network slice corresponds to a network slice optimized for a specific service provided by the service server (100).

**Patentansprüche**

1. Netzwerk-Slice-Steuerungsserver (290), umfassend:

Schaltlogik, die konfiguriert ist zum

Empfangen einer Anforderung zur Nutzung einer Rechenressource oder Netzwerkressource von Software, die in einem entsprechenden dienstspezifischen Netzwerk-Slice enthalten ist, von einem Dienstserver (100),

Messen einer Nutzung des dienstspezifischen Netzwerk-Slices (220), wobei die Nutzung der Nutzungsstatus eines jeden von einem Prozessor, einem Speicher und einem Netzwerk einer virtuellen Maschine oder eines Containers ist, der eine oder mehrere Netzwerk-Slice-Instanzen ausführt, die in dem entsprechenden dienstspezifischen Netzwerk-Slice (220) enthalten sind,

Benachrichtigen des Dienstservers (100) über ein Messergebnis des Nutzungsstatus,

Empfangen einer Anweisung von dem Dienstserver (100) zum Ändern einer S-NSSAI des zu verbindenden Benutzerterminals in eine S-NSSAI des dienstspezifischen Netzwerk-Slices,

Anweisen eines einheitlichen Datenmanagements, UDM, (203), die in dem UDM (203) verwalteten Teilnehmerinformationen unter Verwendung der von dem Dienstserver (100) in der Änderungsanweisung empfangenen Informationen zu aktualisieren, und

Benachrichtigen des Dienstservers (100) über den Abschluss der Aktualisierung,

wobei der dienstspezifische Netzwerk-Slice einem Netzwerk-Slice entspricht, der für einen spezifischen, von dem Dienstserver (100) bereitgestellten Dienst optimiert ist.

2. Netzwerk-Slice-Steuerungsserver (290) nach Anspruch 1,
wobei die mit der Anweisung von dem Dienstserver (100) empfangenen Informationen Identifikationsinformationen des dienstspezifischen Netzwerk-Slices und Identifikationsinformationen des Benutzerterminals (300) einschließen, das mit dem dienstspezifischen Netzwerk-Slice verbunden werden soll.

3. Netzwerk-Slice-Steuerungsserver nach Anspruch 2,
wobei die mit der Anweisung von dem Dienstserver (100) empfangenen Informationen ferner Identifikationsinformationen eines weiteren Benutzerterminals (310) einschließen, das von dem Netzwerk-Slice getrennt werden soll.

4. Netzwerk-Slice-Steuerungsserver nach einem der Ansprüche 1 bis 3, wobei der Netzwerk-Slice-Steuerungsserver (290) in einem Kernnetzwerk der fünften Generation, 5G-Kernnetzwerk, bereitgestellt wird und konfiguriert ist, um mit dem Dienstserver (100) außerhalb des 5G-Kernnetzwerks zu kommunizieren.

5. Dienstserver (100) eines Dienstanbieters, wobei der Dienstserver umfasst:

Schaltlogik, die konfiguriert ist zum
Übertragen einer Anforderung zur Nutzung einer Rechenressource oder Netzwerkressource von Software, die in einem entsprechenden dienstspezifischen Netzwerk-Slice enthalten ist, an einen Netzwerk-Slice-Steuerungsserver (290),

Empfangen einer Benachrichtigung von dem Netzwerk-Slice-Steuerungsserver (290) über ein Messergebnis eines Nutzungsstatus, wobei der Nutzungsstatus die Nutzung eines jeden von einem Prozessor, einem Speicher und einem Netzwerk einer virtuellen Maschine oder eines Containers ist, der eine oder mehrere Netzwerk-Slice-Instanzen ausführt, die in dem entsprechenden dienstspezifischen Netzwerk-Slice enthalten sind, gemessen von dem Netzwerk-Slice-Steuerungsserver (290),

Bestimmen, ob ein Benutzerterminal eine Verbindung zu dem dienstspezifischen Netzwerk-Slice herstellen kann oder nicht,

Übertragen einer Anweisung zum Ändern einer S-NSSAI des zu verbindenden Benutzerterminals in eine S-NSSAI des dienstspezifischen Netzwerk-Slices an den Netzwerk-Slice-Steuerungsserver (290) und

Empfangen einer Benachrichtigung von dem Dienstserver (100) über den Abschluss einer Aktualisierung der in einem einheitlichen Datenmanagement, UDM, (203) verwalteten Teilnehmerinformationen unter Verwendung der von dem Dienstserver (100) empfangenen Informationen in der Änderungsanweisung,

wobei der dienstspezifische Netzwerk-Slice einem Netzwerk-Slice entspricht, der für einen spezifischen, von dem Dienstserver (100) bereitgestellten Dienst optimiert ist.

6. Dienstserver nach Anspruch 5,
wobei in einem Fall, in dem aufgrund einer zusätzlichen Verbindung des Benutzerterminals (300) mit dem dienstspezifischen Netzwerk-Slice ein Engpass auftritt, die Schaltlogik konfiguriert ist, um als zu trennendes Benutzerterminal (310) ein Benutzerterminal auszuwählen, dessen angeforderte Dienstqualität niedriger ist als die des zu verbindenden Benutzerterminals (300), und die Anweisung, die Identifikationsinformationen des von dem dienstspezifischen Netzwerk-Slice zu trennenden Benutzerterminals (310) einschließt, an den Netzwerk-Slice-Steuerungsserver (290) zu übertragen.

**7.** Dienstserver nach Anspruch 6,
wobei die Schaltlogik konfiguriert ist, um das zu trennende Benutzerterminal (310) zu fragen, ob die angeforderte Dienstqualität aktualisiert werden soll oder nicht, bevor die Anweisung, gemäß der eine Benutzerterminalvorrichtung (300) eine Verbindung zu dem dienstspezifischen Netzwerk-Slice herstellen kann, an den Netzwerk-Slice-Steuerungsserver (290) übertragen wird.

**8.** Dienstserver nach einem der Ansprüche 5 bis 7,
wobei der Dienstserver (100) außerhalb eines Kernnetzwerks der fünften Generation, 5G-Kernnetzwerks, bereitgestellt wird und konfiguriert ist, um mit dem Netzwerk-Slice-Steuerungsserver (290) in dem 5G-Kernnetzwerk zu kommunizieren.

**9.** Steuerungsverfahren, das von einem Netzwerk-Slice-Steuerungsserver (290) durchgeführt wird, wobei das Steuerungsverfahren umfasst:

- Empfangen (S813) einer Anforderung zur Nutzung einer Rechenressource oder Netzwerkressource von Software, die in einem entsprechenden dienstspezifischen Netzwerk-Slice enthalten ist, von einem Dienstserver (100);
- Messen (S814) einer Nutzung des dienstspezifischen Netzwerk-Slices (220), wobei die Nutzung der Nutzungsstatus eines jeden von einem Prozessor, einem Speicher und einem Netzwerk einer virtuellen Maschine oder eines Containers ist, der eine oder mehrere Netzwerk-Slice-Instanzen ausführt, die in dem entsprechenden dienstspezifischen Netzwerk-Slice (220) enthalten sind;
- Benachrichtigen (S815) des Dienstservers (100) über ein Messergebnis des Nutzungsstatus;
- Empfangen (S832) einer Anweisung von dem Dienstserver (100) zum Ändern einer S-NSSAI des zu verbindenden Benutzerterminals in eine S-NSSAI des dienstspezifischen Netzwerk-Slices;
- Anweisen eines einheitlichen Datenmanagements, UDM, (203), die in dem UDM (203) verwalteten Teilnehmerinformationen unter Verwendung der von dem Dienstserver (100) in der Änderungsanweisung empfangenen Informationen zu aktualisieren; und
- Benachrichtigen (S834) des Dienstservers (100) über den Abschluss der Aktualisierung,

wobei der dienstspezifische Netzwerk-Slice einem Netzwerk-Slice entspricht, der für einen spezifischen, von dem Dienstserver (100) bereitgestellten Dienst optimiert ist.

**10.** Steuerungsverfahren eines Dienstservers (100), wobei das Steuerungsverfahren umfasst:

- Übertragen (S813) einer Anforderung zur Nutzung einer Rechenressource oder Netzwerkressource von Software, die in einem entsprechenden dienstspezifischen Netzwerk-Slice enthalten ist, an einen Netzwerk-Slice-Steuerungsserver (290);
- Empfangen einer Benachrichtigung (S815) von dem Netzwerk-Slice-Steuerungsserver (290) über ein Messergebnis eines Nutzungsstatus, wobei der Nutzungsstatus die Nutzung eines jeden von einem Prozessor, einem Speicher und einem Netzwerk einer virtuellen Maschine oder eines Containers ist, der eine oder mehrere Netzwerk-Slice-Instanzen ausführt, die in dem entsprechenden dienstspezifischen Netzwerk-Slice enthalten sind, gemessen von dem Netzwerk-Slice-Steuerungsserver (290);
- Bestimmen (S821), ob ein Benutzerterminal eine Verbindung zu dem dienstspezifischen Netzwerk-Slice herstellen kann oder nicht;
- Übertragen (S832) einer Anweisung zum Ändern einer S-NSSAI des zu verbindenden Benutzerterminals in eine S-NSSAI des dienstspezifischen Netzwerk-Slices an den Netzwerk-Slice-Steuerungsserver (290) und
- Empfangen (S834) einer Benachrichtigung von dem Dienstserver (100) über den Abschluss einer Aktualisierung der in einem einheitlichen Datenmanagement, UDM, (203) verwalteten Teilnehmerinformationen unter Verwendung der von dem Dienstserver (100) empfangenen Informationen in der Änderungsanweisung,

wobei der dienstspezifische Netzwerk-Slice einem Netzwerk-Slice entspricht, der für einen spezifischen, von dem Dienstserver (100) bereitgestellten Dienst optimiert ist.

**Revendications**

**1.** Serveur de commande de tranche de réseau (290) comprenant:

un système de circuits configuré pour

recevoir en provenance d'un serveur de service (100) une demande pour l'utilisation d'une ressource informatique ou ressource réseau d'un logiciel inclus dans une tranche de réseau à service spécifique correspondante,
mesurer une utilisation de la tranche de réseau à service spécifique (220), l'utilisation étant l'état d'utilisation de chacun parmi un processeur, une mémoire et un réseau d'une machine virtuelle ou d'un conteneur qui exécute une ou plusieurs instances de tranche de réseau incluses dans la tranche de réseau à service spécifique (220) correspondante,

notifier au serveur de service (100) un résultat de mesure de l'état d'utilisation,

recevoir en provenance du serveur de service (100) une instruction pour changer une S-NSSAI du terminal utilisateur à connecter à une S-NSSAI de la tranche de réseau à service spécifique,

donner pour instruction à une gestion unifiée de données, UDM, (203) de mettre à jour des informations d'abonné gérées dans l'UDM (203) à l'aide des informations reçues en provenance du serveur de service (100) dans l'instruction pour changer, et

notifier au serveur de service (100) l'achèvement de la mise à jour,

dans lequel la tranche de réseau à service spécifique correspond à une tranche de réseau optimisée pour un service spécifique fourni par le serveur de service (100).

2. Serveur de commande de tranche de réseau (290) selon la revendication 1,

dans lequel les informations reçues avec l'instruction en provenance du serveur de service (100) comportent des informations d'identification de la tranche de réseau à service spécifique et des informations d'identification du terminal utilisateur (300) à connecter à la tranche de réseau à service spécifique.

3. Serveur de commande de tranche de réseau selon la revendication 2,

dans lequel les informations reçues avec l'instruction en provenance du serveur de service (100) comportent en outre des informations d'identification d'un terminal utilisateur supplémentaire (310) à déconnecter de la tranche de réseau.

4. Serveur de commande de tranche de réseau selon l'une quelconque des revendications 1 à 3, dans lequel le serveur de commande de tranche de réseau (290) est fourni dans un réseau central de cinquième génération, 5G, et est configuré pour communiquer avec le serveur de service (100) à l'extérieur du réseau central 5G.

5. Serveur de service (100) d'un fournisseur de services, le serveur de service comprenant:

un système de circuits configuré pour transmettre, à un serveur de commande de tranche de réseau (290), une demande pour l'utilisation d'une ressource informatique ou ressource réseau d'un logiciel inclus dans une tranche de réseau à service spécifique correspondante,

recevoir une notification en provenance du serveur de commande de tranche de réseau (290) d'un résultat de mesure d'état d'utilisation, l'état d'utilisation étant l'utilisation de chacun parmi un processeur, une mémoire et un réseau d'une machine virtuelle ou d'un conteneur qui exécute une ou plusieurs instances de tranche de réseau incluses dans la tranche de réseau à service spécifique correspondante, mesurée par le serveur de commande de tranche de réseau (290), déterminer si un terminal utilisateur peut ou non établir une connexion à la tranche de réseau à service spécifique,

transmettre, au serveur de commande de tranche de réseau (290), d'une instruction pour changer une S-NSSAI du terminal utilisateur pour qu'il soit

connecté à une S-NSSAI de la tranche de réseau à service spécifique, et

recevoir une notification en provenance du serveur de service (100) d'achèvement d'une mise à jour d'informations d'abonné gérées dans une gestion unifiée de données, UDM (203) à l'aide d'informations reçues du serveur de service (100) dans l'instruction pour changer,

dans lequel la tranche de réseau à service spécifique correspond à une tranche de réseau optimisée pour un service spécifique fourni par le serveur de service (100).

6. Serveur de service selon la revendication 5, dans lequel dans un cas où un goulot d'étranglement se produit en raison d'une connexion supplémentaire du terminal utilisateur (300) à la tranche de réseau à service spécifique, le système de circuits est configuré pour sélectionner, en tant que terminal utilisateur (310) à déconnecter, un terminal utilisateur plus bas dans la qualité de service demandée que le terminal utilisateur (300) à connecter, et transmettre, au serveur de commande de tranche de réseau (290), l'instruction comportant des informations d'identification du terminal utilisateur (310) à déconnecter de la tranche de réseau à service spécifique.

7. Serveur de service selon la revendication 6, dans lequel le système de circuits est configuré pour interroger le terminal utilisateur (310) à déconnecter concernant le fait que la qualité de service demandée doit être ou non mise à jour, avant transmission, au serveur de commande de tranche de réseau (290), de l'instruction selon laquelle un dispositif terminal d'utilisateur (300) peut établir une connexion à la tranche de réseau à service spécifique.

8. Serveur de service selon l'une quelconque des revendications 5 à 7, dans lequel le serveur de service (100) est fourni à l'extérieur d'un réseau central de cinquième génération, 5G, et est configuré pour communiquer avec le serveur de commande de tranche de réseau (290) dans le réseau central 5G.

9. Procédé de commande mis en œuvre par un serveur de commande de tranche de réseau (290), le procédé de commande comprenant:

- la réception (S813) en provenance d'un serveur de service (100) d'une demande pour l'utilisation d'une ressource informatique ou ressource réseau d'un logiciel inclus dans une tranche de réseau à service spécifique correspondante;
- la mesure (S814) d'une utilisation de la tranche de réseau à service spécifique (220), l'utilisation étant l'état d'utilisation de chacun parmi un processeur, une mémoire et un réseau d'une machine virtuelle ou d'un conteneur qui exécute une ou plusieurs instances de tranche de réseau incluses dans la tranche de réseau à service spécifique (220) correspondante;
- la notification (S815) au serveur de service (100) d'un résultat de mesure de l'état d'utilisation;
- la réception (S832) en provenance du serveur de service (100) d'une instruction pour changer une S-NSSAI du terminal utilisateur à connecter à une S-NSSAI de la tranche de réseau à service spécifique;
- le fait de donner pour instruction à une gestion unifiée de données, UDM, (203) de mettre à jour des informations d'abonné gérées dans l'UDM (203) à l'aide des informations reçues en provenance du serveur de service (100) dans l'instruction pour changer; et
- la notification (S834) au serveur de service (100) de l'achèvement de la mise à jour,

dans lequel la tranche de réseau à service spécifique correspond à une tranche de réseau optimisée pour un service spécifique fourni par le serveur de service (100).

10. Procédé de commande d'un serveur de service (100), le procédé de commande comprenant:

- la transmission (S813), à un serveur de commande de tranche de réseau (290), d'une demande pour l'utilisation d'une ressource informatique ou ressource réseau d'un logiciel inclus dans une tranche de réseau à service spécifique correspondante;
- la réception d'une notification (S815) en provenance du serveur de commande de tranche de réseau (290) d'un résultat de mesure d'état d'utilisation, l'état d'utilisation étant l'utilisation de chacun parmi un processeur, une mémoire et un réseau d'une machine virtuelle ou d'un conteneur qui exécute une ou plusieurs instances de tranche de réseau incluses dans la tranche de réseau à service spécifique correspondante, mesurée par le serveur de commande de tranche de réseau (290),
- le fait de déterminer (S821) si un terminal utilisateur peut ou non établir une connexion à la tranche de réseau à service spécifique;
- la transmission (S832), au serveur de commande de tranche de réseau (290), d'une instruction pour changer une S-NSSAI du terminal utilisateur à connecter à une S-NSSAI de la tranche de réseau à service spécifique; et
- la réception (S834) d'une notification en provenance du serveur de service (100) de l'achèvement d'une mise à jour d'informations d'abonné gérées dans une gestion unifiée de données, UDM (203) à l'aide d'informations reçues en provenance du serveur de service (100) dans l'instruction pour changer,

dans lequel la tranche de réseau à service spécifique correspond à une tranche de réseau optimisée pour un service spécifique fourni par le serveur de service (100).

## FIG. 1

# FIG. 2

# FIG. 3

290

EXPOSURE SERVER

291

NETWORK-SLICE
MONITORING UNIT

292

SUBSCRIBER-INFORMATION
CHANGE UNIT

299

COMMUNICATION UNIT

# FIG. 4

300

## USER TERMINAL

301

### SERVICE CONTRACT UNIT

302

### NETWORK-SLICE DESIGNATION UNIT

303

### COMMUNICATION-CHANNEL SETTING UNIT

309

### WIRELESS COMMUNICATION UNIT

# FIG. 5

100
SERVICE SERVER

104
STORAGE UNIT

101
SERVICE MANAGEMENT UNIT

102
RESOURCE MONITORING UNIT

103
NETWORK-SLICE SELECTION UNIT

109
COMMUNICATION UNIT

# FIG. 6

300
USER
TERMINAL

200
MOBILE
NETWORK

290
EXPOSURE
SERVER

100
SERVICE
SERVER

S811
PERFORM COMMUNICATION THROUGH GENERAL-SERVICE NETWORK SLICE

S812

INFORMATION NECESSARY FOR
SERVICE CONTRACT, IDENTIFIER
OF USER TERMINAL, AND LEVEL
OF REQUESTED SERVICE QUALITY

IDENTIFIER OF SPECIFIC-
SERVICE NETWORK SLICE

S814

MEASURE STATE OF
SPECIFIC-SERVICE NETWORK SLICE

S813

ACQUIRE STATE OF SPECIFIC-
SERVICE NETWORK SLICE

S821
S815

DETERMINE WHETHER OR
NOT USER TERMINAL CAN ESTABLISH
CONNECTION TO NETWORK SLICE

REQUEST CHANGE OF
SUBSCRIBER INFORMATION

S833

GIVE, TO TARGET USER TERMINAL, AUTHORITY TO
ESTABLISH CONNECTION TO NETWORK SLICE, AND
DISCONNECT DISCONNECTION-TARGET USER TERMINAL
FROM SPECIFIC-SERVICE NETWORK SLICE

S832

RESPOND TO CHANGE OF
SUBSCRIBER INFORMATION

S835

ISSUE NOTIFICATION OF CHANGE
OF SUBSCRIBER INFORMATION

S834

S836

IDENTIFY CONNECTION-
DESTINATION NETWORK SLICE

S837
PERFORM COMMUNICATION THROUGH SPECIFIC-SERVICE NETWORK SLICE

# FIG. 7

```
                    START

                                    ⌐S911
   ┌──────────────────────────────────┐
   │ CALCULATE WHETHER BOTTLENECK OCCURS│
   │ IN CASE WHERE TARGET USER TERMINAL HAS│
   │ ESTABLISHED CONNECTION TO NETWORK SLICE│
   └──────────────────────────────────┘

                              ⌐S912
                                      No
        DOES BOTTLENECK OCCUR? ────────────┐
                                           │
                 Yes                       │
                                           │
  L901                                     │
   ┌─────────────────────────┐            │
   │   BOTTLENECK IS PRESENT   │            │
   └─────────────────────────┘            │
                                ⌐S913      │
   ┌──────────────────────────────┐       │
   │  SELECT USER TERMINAL CANDIDATE │       │
   │ LOWER IN REQUESTED SERVICE QUALITY│      │
   │     THAN TARGET USER TERMINAL    │       │
   └──────────────────────────────┘       │
                                ⌐S916      │
   ┌──────────────────────────────────┐   │
   │ CALCULATE WHETHER BOTTLENECK IS ELIMINATED│
   │ IN CASE WHERE USER TERMINAL CANDIDATE IS│
   │   DISCONNECTED FROM NETWORK SLICE    │   │
   └──────────────────────────────────┘   │
                                           │
   ┌─────────────────────────┐            │
   └─────────────────────────┘            │
                                           │
              ⌐S918                  ⌐S919 │
   ┌────────────────────────┐  ┌──────────────────┐
   │ DETERMINE THAT TARGET   │  │ DETERMINE THAT TARGET│
   │ USER TERMINAL IS TO BE  │  │ USER TERMINAL IS    │
   │ CONNECTED TO NETWORK    │  │ CONNECTABLE         │
   │ SLICE AND DISCONNECTION-│  │ TO NETWORK SLICE    │
   │ TARGET USER TERMINALS   │  └──────────────────┘
   │ ARE TO BE DISCONNECTED  │
   │ THEREFROM               │
   └────────────────────────┘

                    END
```

# FIG. 8

300
USER
TERMINAL

200
MOBILE
NETWORK

290
EXPOSURE
SERVER

100
SERVICE
SERVER

S811

| PERFORM COMMUNICATION THROUGH GENERAL-SERVICE NETWORK SLICE |

S812

INFORMATION NECESSARY FOR
SERVICE CONTRACT, IDENTIFIER
OF USER TERMINAL, AND LEVEL
OF REQUESTED SERVICE QUALITY

IDENTIFIER OF SPECIFIC-
SERVICE NETWORK SLICE

S813

S814

| MEASURE STATE OF
SPECIFIC-SERVICE NETWORK SLICE |

310

DISCONNECTION-
CANDIDATE USER
TERMINAL

ACQUIRE STATE OF SPECIFIC-
SERVICE NETWORK SLICE

S815

S821

S822

REQUEST CHANGE OF
SUBSCRIBER INFORMATION

| DETERMINE WHETHER OR
NOT USER TERMINAL CAN ESTABLISH
CONNECTION TO NETWORK SLICE |

PERMIT/REJECT

S823

REQUEST CHANGE OF
SUBSCRIBER INFORMATION

S833

S832

| GIVE, TO TARGET USER TERMINAL, AUTHORITY TO
ESTABLISH CONNECTION TO NETWORK SLICE, AND
DISCONNECT DISCONNECTION-TARGET USER TERMINAL
FROM SPECIFIC-SERVICE NETWORK SLICE |

RESPOND TO CHANGE OF
SUBSCRIBER INFORMATION

S835

ISSUE NOTIFICATION OF CHANGE
OF SUBSCRIBER INFORMATION

S836

S834

IDENTIFY CONNECTION-
DESTINATION NETWORK SLICE

S837

| PERFORM COMMUNICATION THROUGH SPECIFIC-SERVICE NETWORK SLICE |

# FIG. 9

START

S911
CALCULATE WHETHER BOTTLENECK OCCURS IN CASE WHERE TARGET USER TERMINAL HAS ESTABLISHED CONNECTION TO NETWORK SLICE

S912
DOES BOTTLENECK OCCUR?  No

Yes

L901
BOTTLENECK IS PRESENT

S913
SELECT USER TERMINAL CANDIDATE LOWER IN REQUESTED SERVICE QUALITY THAN TARGET USER TERMINAL

S914
MAKE INQUIRY AS TO WHETHER LEVEL OF REQUESTED SERVICE QUALITY IS TO BE UPGRADED

S915
IS LEVEL OF REQUESTED SERVICE QUALITY UPGRADED?  Yes

No

S916
CALCULATE WHETHER BOTTLENECK IS ELIMINATED IN CASE WHERE USER TERMINAL CANDIDATE IS DISCONNECTED FROM NETWORK SLICE

S918
DETERMINE THAT TARGET USER TERMINAL IS TO BE CONNECTED TO NETWORK SLICE AND DISCONNECTION-TARGET USER TERMINALS ARE TO BE DISCONNECTED THEREFROM

S919
DETERMINE THAT TARGET USER TERMINAL IS CONNECTABLE TO NETWORK SLICE

END

**EP 4 007 371 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018157506 A
- WO 2020228698 A1
- US 2018352501 A1
- US 2019053104 A1